# EUROPEAN PATENT APPLICATION

(11) **EP 1 326 187 A1**
(43) Date of publication of application: **09.07.2003**
(21) Application number: 01970136.6
(22) Date of filing: 19.09.2001
(51) Int. Cl.: G06F 17/60

(54) **ELECTRONIC COMMERCE SYSTEM**

(30) Priority: 28.09.2000 JP 2000295593
(71) Applicant: Skinner, James Jay, Tokyo 104-0051 (JP)
(72) Inventor: Skinner, James Jay, Tokyo 104-0051 (JP)
(74) Representative: Kirschner, Klaus Dieter, Dipl.-Phys.
(86) International application number: JP0108123
(87) International publication number: WO02027588

(57) **Abstract**

The present invention enables a customer to conduct electronic commerce without divulging confidential information to vendors.

The present invention is an electronic commerce transaction system comprising a vendor terminal that has an information transmission means that transmits electronic commerce transaction information, including at least information on the amount to be paid and the vendor identifier,
a customer terminal used by the customer having a data-receiving unit for receiving said electronic commerce transaction information from said vendor terminal and a data-transmission unit for sending said electronic commerce transaction information, the customer's registered identifier, and a transaction authentication code,
and a financial institution terminal prepared in a financial institution with a data-receiving unit for receiving said electronic commerce transaction information, said customer's registered identifier, and transaction authentication code, as well as a database to specify the customer based on the registered identifier and to authenticate the customer based on the received transaction authentication code,
and wherein, said vendor terminal transmits electronic commerce transaction information to said customer terminal, said financial institution terminal receives the customer's registered identifier, and a transaction authentication code, and the electronic commerce transaction information from said customer terminal, and said database of said financial institution terminal identifies the customer based on the registered identifier and authenticates the customer based on the received transaction authenticates code using said database,
and wherein, said financial institution terminal processes the payment of the payment amount to the vendor based on said electronic commerce transaction information, and withdraws the payment amount from the customer's account or bills the customer for the payment amount.

## Description

### FIELD OF THE INVENTION

The present invention relates to an electronic commerce transaction system, and more particularly, it relates to an electronic commerce transaction system that can allow consumers to carry out electronic commerce transactions without presenting confidential personal information, such as credit card numbers, bank account numbers, pass words, and the like, to vendors.

### PRIOR ART

In recent years, electronic commerce, and especially on-line shopping via the Internet, has become popular among consumers. In a typical Internet transaction, the customer accesses a company web site set up for Internet online shopping and searches for the product or service they need. After finding the desired product or service, the customer enters transaction information, such as product numbers, the number of a product to be purchased, the total price, credit card number, expiration date of the credit card, and the like, and then place their order by clicking on a button, such as an order confirmation button in the online shopping web page. Electronic commerce vendors, after receiving the order via the Internet, send the ordered products to the customer. Payment for the transaction is processed by the credit card company and transferred to a specified bank account of the vendor, and the payment amount for the purchased products is deducted from the bank account of the customer on the settlement date.

Many retailers and restaurants accept payment by credit card or debit card. In a typical credit card transaction, the customer brings the product he or she wants to buy to a customer service counter, such as a payment counter, and presents his or her credit card to the a shop clerk. The clerk uses a terminal card reader to scan magnetic data from the customer's credit card. The terminal card reader is connected to a computer of the credit card company, which verifies the card to authorize the transaction. Once authorization is given, the retail store issues a slip for the transaction. The customer signs the slip to complete the transaction. Payment for the transaction to the store is carried out by the credit card company, and the payment amount is reimbursed to the credit card company through a deduction from the customer's bank account.

Payment steps for a debit card transaction are similar, except that some card types may require the customer to enter passwords for their accounts on a terminal in the shop, rather than signing a slip.

Such electronic commerce transactions, of which Internet online shopping is representative, require customers to transmit confidential information, such as credit card numbers, over the Internet, causing anxiety among many customers that such confidential information might be stolen and put to improper use. Further, this system is inconvenient in that it requires the customer to input information relating to the electronic commerce transaction, such as product numbers, prices, credit card numbers, and the like, each time they make a purchase.

Payment by credit card or debit card at a retail store also requires the customer to show a shop clerk or to input into the store's terminal, such confidential information as credit card number or bank account PIN number, creating a risk that this information could be stolen or misused.

Accordingly it is an object of the present invention to provide electronic commerce transactions without the need for the customer to show the vendor confidential information, while eliminating the above-mentioned inconveniences.

### DISCLOSURE OF THE INVENTION

The present invention is an electronic commerce transaction system comprising a financial institution terminal having 1) a data-receiving unit for receiving electronic commerce transaction information, a customer's registered identifier, and a transaction authentication code from a customer terminal having a data-receiving unit for receiving electronic commerce transaction information from a vendor terminal that has an information transmission means that transmits electronic commerce transaction information, including at least information on the amount to be paid and the vendor identifier, and said customer terminal further having a data-transmission unit for sending electronic commerce transaction information, customer's registered identifier, and a transaction authentication code, and 2) a database to identify the customer based on the registered identifier and to authenticate the customer based on the received transaction authentication code,
and wherein, said vendor terminal transmits electronic commerce transaction information to said customer terminal, said financial institution terminal receives the customer's registered identifier, and transaction authentication code, and the electronic commerce transaction information from said customer terminal, and said database of said financial institution terminal identifies the customer based on the registered identifier and authenticates the customer based on the received transaction authentication code using said database,
and wherein, said financial institution terminal processes the payment of the payment amount to the vendor based on said electronic commerce transaction information, and withdraws the payment amount from the customer's account or bills the customer for the payment amount.

The present invention is an electronic commerce transaction system comprising a vendor terminal that has an information transmission means that transmits electronic commerce transaction information, including at least information on the amount to be paid and the vendor identifier,
a customer terminal used by the customer having a data-receiving unit for receiving said electronic commerce transaction information from said vendor terminal and a data-transmission unit for sending said electronic commerce transaction information, the customer's registered identifier, and a transaction authentication code,
and a financial institution terminal prepared in a financial institution with a data-receiving unit for receiving said electronic commerce transaction information, said customer's registered identifier, and transaction authentication code, as well as a database to specify the customer based on the registered identifier and to authenticate the customer based on the received transaction authentication code,
and wherein, said vendor terminal transmits electronic commerce transaction information to said customer terminal, said financial institution terminal receives the customer's registered identifier, and a transaction authentication code, and the electronic commerce transaction information from said customer terminal, and said database of said financial institution terminal identifies the customer based on the registered identifier and authenticates the customer based on the received transaction authenticates code using said database,
and wherein, said financial institution terminal processes the payment of the payment amount to the vendor based on said electronic commerce transaction information, and withdraws the payment amount from the customer's account or bills the customer for the payment amount.

The electronic commerce transaction system according to the present invention is used practically in the following manner. The customer notifies the vendor that the customer will make payment using this system, and the vendor transmits the electronic commerce transaction information from the vendor terminal to the customer terminal. The customer terminal transmits the electronic commerce transaction information received from the vendor terminal, along with the customer's registered identifier stored in the customer terminal, and the transaction authenticates code input by the customer to the financial institution terminal. The financial institution terminal that received said information authenticates the customer based on the received transaction authentication code and processes the payment based on the electronic commerce transaction information.

Also, authentication of the customer making the transaction may be made based on the fact that the customer has physical access to the customer terminal. Further, the electronic commerce transaction information may be input directly by the customer into the customer terminal without being send transmitted from the vendor terminal to the customer terminal.

Also, the present invention may be configured such that said financial institution terminal further has a data-transmission unit for transmitting payment verification information to said vendor terminal and transmits payment verification information to said customer terminal and/or said vendor terminal after said database of said financial institution terminal verifies the transaction authentication code or said financial institution terminal authenticates the customer.

It is preferable that said customer terminal be a portable terminal capable of being carried by the customer, and further it is preferable that the portable terminal function be built into a mobile phone or other portable wireless digital means of communication.

The means by which the portable terminal receives electronic commerce transaction information from the vendor terminal may be radio waves, light, electric cable, optical cable, magnetic card, IC card, or a direct connection with the vendor terminal.

The transaction authentication code may be a PIN number or biological characteristic of the customer.

Also, it is preferable that the customer terminal be equipped with a means of selecting the financial institution or means of payment to be used to allow the selection of the financial institution to transmit the electronic commerce transaction information to or the customer's registered identifier to be transmitted based on the financial institution or payment method input by the customer.

Information may also be sent to the financial institution terminal from the customer terminal by way of the vendor terminal, or alternatively, the vendor terminal may transmit said electronic commerce transaction information to said customer terminal by way of the financial institution terminal.

It is preferable that the customer terminal has a record of the address to which the goods or services purchased by the customer are to be delivered. Also, the system may be configured such that the vendor terminal and customer terminal are connected via the Internet, and the vendor terminal formats the electronic commerce transaction data based on purchase data input to the vendor terminal from the customer terminal by customer via the Internet.

Further, the customer's registered identifier may also be used as the authentication code, and the transaction authentication code may be configured to include at least the customer's account number.

### BRIEF DESCRIPTION OF THE DRAWINGS

Fig. 1 is a diagram illustrating the overall configuration of a preferred embodiment according to the present invention; and
Fig. 2 is a block diagram showing the flow of an electronic commerce transaction in a preferred embodiment according to the present invention.

### PREFERRED EMBODIMENT OF THE INVENTION

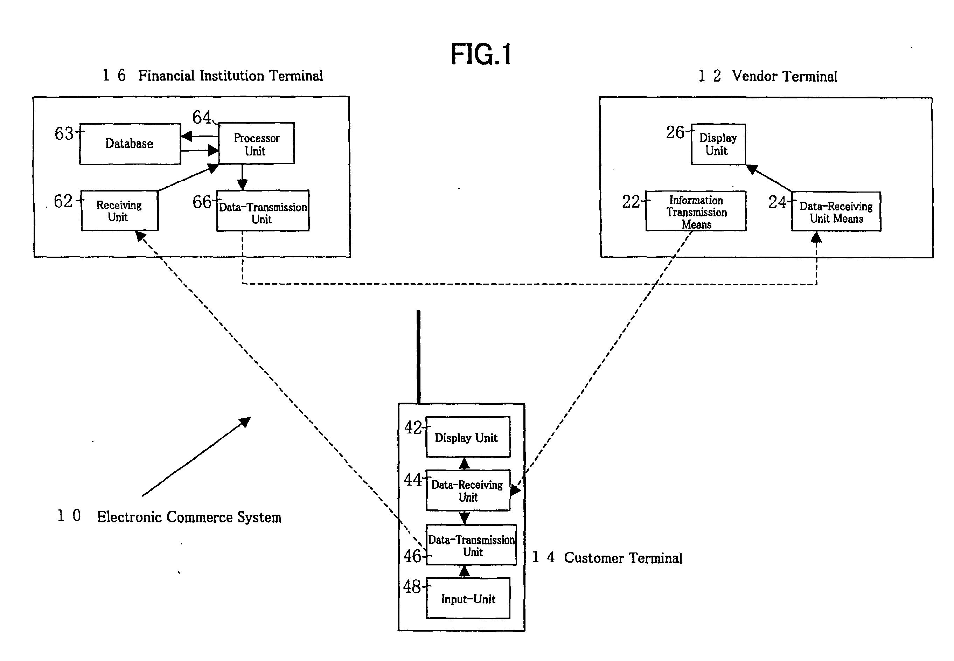

A preferred embodiment of the present invention will be described in conjunction with the accompanying drawings. A preferred embodiment of the electronic commerce system 10 of the present invention, includes as shown in Fig. 1, a vendor terminal 12 in vendor's shop, a customer terminal, such as a mobile phone, 14 carried by the customer using this system, and a financial institution terminal 16 with a means of communication, located at a bank or credit company.

A customer using the electronic commerce transaction system of this embodiment is registered in the financial institution database 63, with the related information of customer's registered identifier, account number, and transaction authentication code, and the vendor is registered in database 63, with the related vendor identifier and account number. If the customer's account number is used as the customer's registered identifier and the vendor's account number is used as the vendor identifier, this registration can be abbreviated. Further, the customer registers their identifier in customer terminal 14.

Vendor terminal 12 has an information transmission means 22 to transmit the electronic commerce transaction information, meaning the payment amount for the purchased product and the vendor identifier, to customer terminal 14, a data-receiving unit 24 to receive payment verification information, and a display unit 26 to display said received information. The portable customer terminal 14 carried by the customer had a data-receiving unit 44 to receive the information transmitted by the information transmission means 22 of vendor terminal 12, a data-transmission unit 46 to transmit the electronic commerce transaction data transmitted by information transmission means 22 and the customer's registered identifier to financial institution terminal 16, a display unit 42 to display the received information, and an input unit 48 to input, for example, the authentication code. The financial institution terminal 16, has a receiving unit 62 to receive the information transmitted from the customer terminal 14, a database 63 that stores the related information of customer's registered identifier, customer's account number, and transaction authentication code, and a processor unit 64 to identify the customer's account number and authentication code based on the received customer's registered identifier information that was sent, and a data-transmission unit 66 to transmit payment verification information.

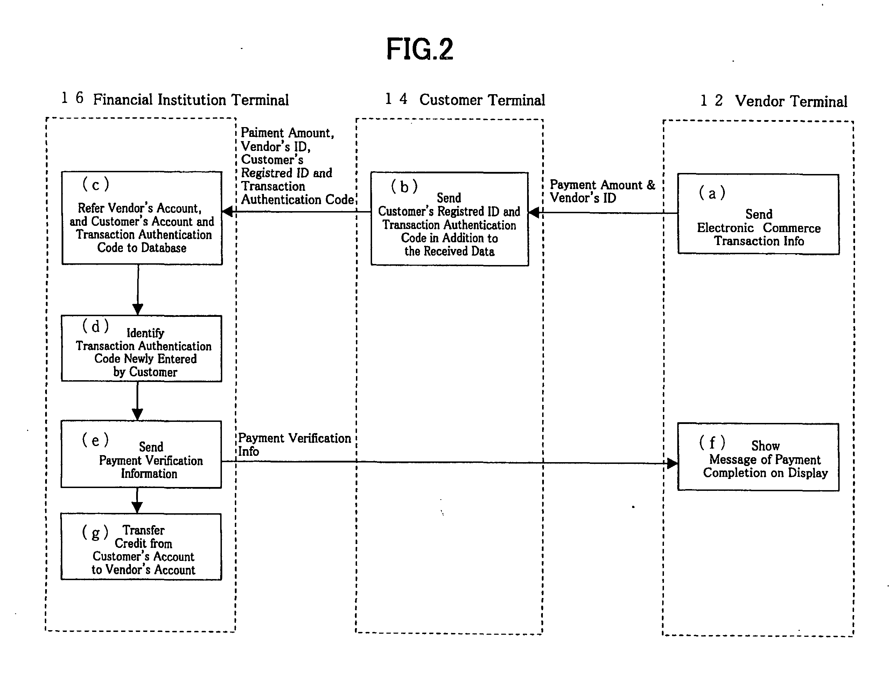

Next, with reference to Fig. 2, an operation of the preferred embodiment of the present invention will be described. When a customer uses the electronic commerce transaction system of the present embodiment, the customer informs the clerk of a retail shop that customer will pay using this system, and informs the clerk of the identifier for customer terminal 14, such as telephone number. The clerk used the vendor terminal 12 located in the shop, and transmits the electronic commerce transaction information, including vendor identifier and payment price of the product to be purchased to customer's customer terminal 14 (refer to (a) in Fig. 2 ). In other words, information transmission means 22 of vendor terminal 12, uses for example a telephone line to transmit said electronic commerce transaction information to the data-receiving unit 44 of the customer terminal 14. When the electronic commerce transaction information is received, the data-transmission unit 46 of customer terminal 14, transmits said electronic commerce transaction information and the customer's registered identifier to financial institution terminal 16. Further, the customer uses the an input unit 48, such as the dial buttons on a mobile phone, of customer terminal 14 to input the transaction authentication code, such as the PIN number for a bank account, and this authentication code is transmitted to the financial institution terminal (refer to (b) in Fig. 2). Existing phone lines or other wireless means of communication can be used for transmission.

When receiving unit 62 of financial institution terminal 16 receives the information from customer terminal 14, the processor unit 64 of financial institution terminal 16 searches database 63 to match if the customer's registered identifier is registered, identifies the customer's account number and transaction authentication code recorded in database 63, and further identifies vendor's account number based on the vendor identifier (refer to (c) in Fig. 2). If the customer's registered identifier transmitted is not recorded in database 63, the data transmission unit 66 of financial institution terminal 16 transmits a message to that effect to customer terminal 14, and processing is completed (not shown).

When the account number and transaction authentication code for the customer recorded in database 63 are identified, the processor unit 64 of financial institution terminal 16 compares the authentication code input by customer to see if it is the same as the identified authentication code (refer to (d) in Fig. 2). When verification has been made that the input transaction authentication code is correct, a message that payment is complete is transmitted by data-transmission unit 66 of financial institution terminal 16 to vendor terminal 12 (refer to (e) in Fig. 2). If the transaction authentication code input by customer is different than the transaction authentication code recorded in database 63, a message to that effect is transmitted to customer terminal 14, and processing is completed (not shown). When vendor terminal 12 receives a message to the effect that payment is complete, that message is displayed on the display unit 26 of vendor terminal 12 (refer to (f) in Fig. 2), and the vendor confirms this. Further, the system may be configured such that this information is further transmitted from the information transmission means 22 of vendor terminal 12 to data-receiving unit 44 of customer terminal 14, and a message to the effect that payment is completed can be displayed on display unit 42 of customer terminal 14 (not shown).

Next, the processor unit 64 of financial institution terminal 16, withdraws the payment amount for the goods purchased from customer's bank account based on the information received, meaning the payment amount for the goods purchased and the vendor's bank account identified, and processes the transfer of the payment amount to vendor's bank account (refer to (g) in Fig. 2). Further, the financial institution may transfer the funds on some designated settlement date rather than transferring the funds right away.

In this embodiment, the customer uses a mobile phone as customer terminal 14, but a portable television capable of information transmission, Internet device or the like, two-way means of information communication, or other device may also be used.

Also, in this embodiment, information transmission means 22 of vendor terminal 12 uses a telephone line to transmit information to customer terminal 14, but an Internet line, or wireless communication line using infrared or radio waves may also be used for information transmission means 22. In addition, vendor terminal 12 and customer terminal 14 may be connected by means of electrical cable or optical cable, or customer terminal may be inserted into a socket in vendor terminal 12 to transmit information. Further, information to be transmitted from vendor terminal 12 to customer terminal 14 may be transmitted by recording the information in a magnetic card, IC card, or the like, and then inserting said card in customer terminal 14.

Also, in this embodiment, financial institution terminal 16 uses a bank account PIN number for authentication. However, a scanner to read customer's fingerprints, iris, or other biological characteristic may be attached to customer terminal 14, and biological characteristics used as a means of authentication of customer. In this specification, transaction authentication refers to input an authentication code, including input of PIN number or other code or scanning of biological characteristics. Further, customer terminal 14 may be given an authentication code, and transmission of information from a customer able to physically access that specific customer terminal may be used for transaction authentication by financial institution terminal 16.

The explanation thus far shows an electronic commerce transaction between a customer, vendor, and bank, but financial institution could also be a loan company, credit card company, debit card company, securities company, or the like, and vendor refers not only to retailers, but to service companies, mail order companies using the Internet, and the like. In this specification, payment amount refers to the cost of goods or services, or the like.

Also, in this embodiment, the payment amount is transferred directly from customer's bank account to vendor's bank account. However, payment may also be made via a credit card company or the like on a pre-designated settlement date, and further payment may be made by mailing check, note, or the like to vendor, rather than transferring payment to vendor's account. The system may also be configured so that a bill is sent to customer for payment.

Further, in this embodiment, communication between customer terminal 14 and financial institution terminal 16 is performed by wireless means of communication, such as mobile telephone. However, when wireless communication is not possible or not desired, wire-based communication may also be used, such as land-line telephone, or a socket to an Internet lines prepared in vendor terminal 12, to which customer terminal 14 is connected to transmit information with financial terminal 16. Wireless communication can be done not only by radio waves, but by infrared and the like.

Also, for the purpose of product shipping and the like, a function for transmitting the customer's address information and the like from customer terminal 14 to vendor terminal 12 may be added.

Further, financial terminal 16 may abbreviate the step of transmitting payment verification information to the vendor terminal and/or the customer terminal. Also, the step of transmitting the electronic commerce transaction data from vendor terminal 12 to customer terminal 14 can be abbreviated. In this case, the electronic commerce transaction data is input directly into customer terminal 14.

As described in this specification, using the electronic commerce transaction system according to the present embodiment, because there is no necessity of showing a vendor a credit card number or bank account number, or inputting a PIN number into vendor's terminal, the risk of such numbers being stolen by vendor can be avoided.

Also, using the electronic commerce transaction system according to the present embodiment, the payment process can be greatly simplified. In other words, when a customer wants to make a purchase, all they need to do is to inform the clerk of the identifier of customer terminal 14 and input the transaction authentication code, and all payment processing can be completed.

### PROBABILITY OF INDUSTRIAL APPLICATION OF THE INVENTION

The present invention enables customers to transaction electronic commerce without showing confidential information to vendors and without customer's manual entry of electronic commerce information.

## Claims

1. An electronic commerce transaction system comprising a financial institution terminal having 1) a data-receiving unit for receiving electronic commerce transaction information, a customer's registered identifier, and a transaction authentication code from a customer terminal having a data-receiving unit for receiving electronic commerce transaction information from a vendor terminal that has an information transmission means that transmits electronic commerce transaction information, including at least information on the amount to be paid and the vendor identifier, and said customer terminal further having a data-transmission unit for sending electronic commerce transaction information, customer's registered identifier, and a transaction authentication code, and 2) a database to identify the customer based on the registered identifier and to authenticate the customer based on the received transaction authentication code,
and wherein, said vendor terminal transmits electronic commerce transaction information to said customer terminal, said financial institution terminal receives the customer's registered identifier, and transaction authentication code, and the electronic commerce transaction information from said customer terminal, and said database of said financial institution terminal identifies the customer based on the registered identifier and authenticates the customer based on the received transaction authentication code using said database,
and wherein, said financial institution terminal processes the payment of the payment amount to the vendor based on said electronic commerce transaction information, and withdraws the payment amount from the customer's account or bills the customer for the payment amount.

2. An electronic commerce transaction system comprising a financial institution terminal having 1) a data-receiving unit for receiving electronic commerce transaction information, a customer's registered identifier, and a transaction authentication code from a customer terminal having a data-receiving unit for receiving electronic commerce transaction information from a vendor terminal that has an information transmission means that transmits electronic commerce transaction information, including at least information on the amount to be paid and the vendor identifier, and said customer terminal further having a data-transmission unit for sending electronic commerce transaction information and customer's registered identifier, and 2) a database to identify the customer based on the registered identifier,
and wherein, said vendor terminal transmits electronic commerce transaction information to said customer terminal, said financial institution terminal receives the customer's registered identifier and the electronic commerce transaction information from said customer terminal, and said database of said financial institution terminal identifies the customer based on the registered identifier and said financial institution terminal authenticates the customer based on the fact that the customer has physical access to the customer terminal,
and wherein, said financial institution terminal processes the payment of the payment amount to the vendor based on said electronic commerce transaction information, and withdraws the payment amount from the customer's account or bills the customer for the payment amount.

3. An electronic commerce transaction system comprising a vendor terminal that has an information transmission means that transmits electronic commerce transaction information, including at least information on the amount to be paid and the vendor identifier,
a customer terminal used by the customer having a data-receiving unit for receiving said electronic commerce transaction information from said vendor terminal and a data-transmission unit for sending said electronic commerce transaction information, the customer's registered identifier, and a transaction authentication code,
and a financial institution terminal prepared in a financial institution with a data-receiving unit for receiving said electronic commerce transaction information, said customer's registered identifier, and transaction authentication code, as well as a database to specify the customer based on the registered identifier and to authenticate the customer based on the received transaction authentication code,
and wherein, said vendor terminal transmits electronic commerce transaction information to said customer terminal, said financial institution terminal receives the customer's registered identifier, and a transaction authentication code, and the electronic commerce transaction information from said customer terminal, and said database of said financial institution terminal identifies the customer based on the registered identifier and authenticates the customer based on the received transaction authenticates code using said database,
and wherein, said financial institution terminal processes the payment of the payment amount to the vendor based on said electronic commerce transaction information, and withdraws the payment amount from the customer's account or bills the customer for the payment amount.

4. An electronic commerce transaction system comprising a vendor terminal that has an information transmission means that transmits electronic commerce transaction information, including at least information on the amount to be paid and the vendor identifier,
a customer terminal used by the customer having a data-receiving unit for receiving said electronic commerce transaction information from said vendor terminal and a data-transmission unit for sending said electronic commerce transaction information and the customer's registered identifier,
and a financial institution terminal prepared in a financial institution with a data-receiving unit for receiving said electronic commerce transaction information and said customer's registered identifier, as well as a database to specify the customer based on the registered identifier,
and wherein, said vendor terminal transmits electronic commerce transaction information to said customer terminal, said financial institution terminal receives the customer's registered identifier and the electronic commerce transaction information from said customer terminal, and said database of said financial institution terminal identifies the customer based on the registered and said financial institution terminal authenticates the customer based on the fact that the customer has physical access to the customer terminal,,
and wherein, said financial institution terminal processes the payment of the payment amount to the vendor based on said electronic commerce transaction information, and withdraws the payment amount from the customer's account or bills the customer for the payment amount.

5. An electronic commerce transaction system comprising a financial institution terminal having 1) a data-receiving unit for receiving electronic commerce transaction information, including at least information on the amount to be paid and the vendor identifier, a customer's registered identifier, and a transaction authentication code from a customer terminal having a data-transmission unit for sending electronic commerce transaction information, customer's registered identifier, and a transaction authentication code, and 2) a database to identify the customer based on the registered identifier and to authenticate the customer based on the received transaction authentication code,
and wherein, said aforesaid financial institution terminal receives the customer's registered identifier, and transaction authentication code, and the electronic commerce transaction information from said customer terminal, and said database of said financial institution terminal identifies the customer based on the registered identifier and authenticates the customer based on the received transaction authentication code using said database,
and wherein, said financial institution terminal processes the payment of the payment amount to the vendor based on said electronic commerce transaction information, and withdraws the payment amount from the customer's account or bills the customer for the payment amount.

6. An electronic commerce transaction system comprising a financial institution terminal having 1) a data-receiving unit for receiving electronic commerce transaction information, including at least information on the amount to be paid and the vendor identifier, and a customer's registered identifier from a customer terminal having a data-transmission unit for sending electronic commerce transaction information and customer's registered identifier, and 2) a database to identify the customer based on the registered identifier,
and wherein, said aforesaid financial institution terminal receives the customer's registered identifier and the electronic commerce transaction information from said customer terminal, and said database of said financial institution terminal identifies the customer based on the registered identifier and said financial institution terminal authenticates the customer based on the fact that the customer has physical access to the customer terminal,
and wherein, said financial institution terminal processes the payment of the payment amount to the vendor based on said electronic commerce transaction information, and withdraws the payment amount from the customer's account or bills the customer for the payment amount.

7. An electronic commerce transaction system according to any one of claim 1 to claim 4, wherein said financial institution terminal further has a data-transmission unit for transmitting payment verification information to said vendor terminal and which transmits payment verification information to said customer terminal and/or said vendor terminal after said database of said financial institution terminal verifies the transaction authentication code or said financial institution terminal authenticates the customer.

8. An electronic commerce transaction system according to either claim 5 or claim 6, further having a vendor terminal, and wherein said financial institution terminal further has a data-transmission unit for transmitting payment verification information to said vendor terminal and transmits payment verification information to said customer terminal and/or said vendor terminal after said database of said financial institution terminal verifies the transaction authentication code or said financial institution terminal authenticates the customer.

9. An electronic commerce transaction system according to any one of claim 1 to claim 8, wherein said customer terminal is a portable terminal carried by customer.

10. An electronic commerce transaction system according to claim 9 wherein said portable terminal function is built into a mobile phone or other portable wireless digital means of communication.

11. An electronic commerce transaction system according to either claim 9 or claim 10, wherein the means by which the portable terminal receives electronic commerce transaction information from the vendor terminal being radio waves, light, electric cable, optical cable, magnetic card, IC card, or a direct connection with the vendor terminal..

12. An electronic commerce transaction system according to any one of claim 1, claim 3, claim 5, claim 7, or claim 8, wherein the transaction authentication code is a PIN number or biological characteristic of the customer.

13. An electronic commerce transaction system according to any one of claim 1 to claim 10, wherein the customer terminal is equipped with a means of selecting the financial institution or means of payment to be used to allow the selection of the financial institution to transmit the electronic commerce transaction information to or the customer's registered identifier to be transmitted based on the financial institution or payment method input by the customer.

14. An electronic commerce transaction system according to any one of claim 1 to claim 4, or claim 7 to claim 10, wherein information is sent to the financial institution terminal from the customer terminal by way of the vendor terminal.

15. An electronic commerce transaction system according to any one of claim 1 to claim 4, or claim 7 to claim 10, wherein the vendor terminal transmits said electronic commerce transaction information to said customer terminal by way of the financial institution terminal.

16. An electronic commerce transaction system according to any one of claim 1 to claim 4, or claim 7 to claim 10, wherein the customer terminal contains a record of the address to which the goods or services purchased by the customer are to be delivered and has a means of transmitting that information to the vendor terminal.

17. An electronic commerce transaction system according to any one of claim 1 to claim 4, or claim 7 to claim 10, wherein the vendor terminal and customer terminal are connected via the Internet, and the vendor terminal formats the electronic commerce transaction data based on purchase data input to the vendor terminal from the customer terminal by customer via the Internet.

18. An electronic commerce transaction system according to any one of claim 1, claim 3, claim 5, claim 7, or claim 8, wherein the customer's registered identifier and the authentication code are the same.

19. An electronic commerce transaction system according to any one of claim 1, claim 3, claim 5, claim 7, or claim 8, wherein the transaction authentication code is configured to include at least the customer's account number.
